Europäisches Patentamt

European Patent Office

Office européen des brevets

(19)

(11) **EP 1 160 682 A1**

(12) # EUROPEAN PATENT APPLICATION

(43) Date of publication:
**05.12.2001 Bulletin 2001/49**

(51) Int Cl.⁷: **G06F 17/30**

(21) Application number: **00112031.0**

(22) Date of filing: **02.06.2000**

(84) Designated Contracting States:
**AT BE CH CY DE DK ES FI FR GB GR IE IT LI LU MC NL PT SE**
Designated Extension States:
**AL LT LV MK RO SI**

(71) Applicants:
- **Seidl, Thomas, Dr.**
  **82008 Unterhaching (DE)**
- **Pötke, Marco**
  **81541 München (DE)**

- **Kriegel, Hans-Peter, Prof.Dr.**
  **86399 Bobingen (DE)**

(72) Inventors:
- **Seidl, Thomas, Dr.**
  **82008 Unterhaching (DE)**
- **Pötke, Marco**
  **81541 München (DE)**
- **Kriegel, Hans-Peter, Prof.Dr.**
  **86399 Bobingen (DE)**

(54) **Relation interval tree**

(57)     Modern database applications show a growing demand for efficient and dynamic management of intervals, particularly for temporal or spatial data as well as for constraint handling. Common approaches require the augmentation of index structures which, however, is not supported by existing relational database systems. By design, the new Relational Interval Tree (*RI-tree*) employs built-in indexes on an as-they-are basis and is very easy to implement. Whereas the functionality and efficiency of the RI-tree is supported by any off-the-shelf relational DBMS, it may be perfectly encapsulated by the object-relational data model.

The RI-tree requires $O(n/b)$ disk blocks of size $b$ to store $n$ intervals, $O(log_b n)$ I/O operations for insertion or deletion, and $O(h \cdot log_b n + r/b)$ I/Os for an intersection query producing $r$ results. The height $h$ of the virtual backbone tree corresponds to the current expansion and granularity of the data space but does not depend on $n$. As demonstrated by our experimental evaluation on an Oracle8i server, competing dynamic interval access methods are outperformed by factors of up to 42 for disk accesses and 4.9 for query response time.

EP 1 160 682 A1

**Description**

**1 Introduction**

There is a growing demand for database applications that handle temporal and spatial data. Intervals occur as transaction time and valid time ranges in temporal databases [SOL 94] [Ram 97] [BÖ 98], as line segments on a space-filling curve in spatial applications [FR 89] [BKK 99], as inaccurate measurements with tolerances in engineering databases, for hierarchical type systems in object-oriented databases [KRVV 93] [Ram 97], or for handling interval and finite domain constraints in declarative systems [KS 91] [KRVV 93] [HP 94]. Particularly for industrial or commercial applications, the integration into RDBMS or ORDBMS is essential.

The *Relational Interval Tree* (*RI-tree*) is a new method to efficiently support intersection queries, i.e. reporting all intervals from the database that overlap a given query interval. Rather than being a typical external memory data structure, the RI-tree follows a new paradigm in being a *relational storage structure*. The basic idea is to manage the data objects by common relational indexes rather than to access raw disk blocks directly. While exploiting the availability, robustness and high performance of built-in index structures in existing systems, the advantages for the RI-tree are in detail:

- Built-in indexes are used on an *as-they-are* basis without any augmentation of the internal data structure. Thus, no interface below the SQL level is required, and any arbitrary off-the-shelf RDBMS supports the technique. Moreover, intrusive extensions which are typical for previous interval access methods are even not supported by modern ORDBMS.
- A proper integration with existing RDBMS is an essential aspect for most industrial or commercial applications. By using built-in relational index structures, their strong robustness, performance and integration into transaction management (including recovery mechanisms and concurrency control) is for free. Thus, a lot of implementation efforts and code maintenance is avoided by a relational storage structure in contrast to typical external memory solutions.
- The efficiency of the RI-tree is based on the logarithmic I/O complexity of the underlying relational system for one-dimensional range queries on point data. Almost all RDBMS qualify for this quite weak requirement since they typically have implemented the popular B+-tree. By virtualizing the backbone structure of the original main-memory method and storing the intervals in relational indexes, a high efficiency for the RI-tree is achieved.
- In addition to its efficient support by any off-the-shelf RDBMS, the Relational Interval Tree perfectly fits to the object-relational facilities of modern DBMS including the Oracle8i Server [Ora 99a], the Informix Universal Server [Inf 98] or the IBM DB2 Universal Database [IBM 99]. These systems support integrating the RI-Tree with the declarative SQL level as well as with the relational query optimizer.

Technically, the RI-tree manages intervals by two relational indexes. For storing $n$ intervals, $O(n/b)$ disk pages are necessary, and inserting or deleting an interval requires $O(\log_{b}n)$ I/O operations where $b$ denotes the disk block size following [MTT 00]. For reporting the $r$ intervals that intersect a given query interval, $O(h \cdot \log_{b}n + r/b)$ I/Os are required. The height $h$ of the virtual backbone reflects the current expansion and granularity of the data space and is independent of the number $n$ of intervals.

Summarizing the design goals, the Relational Interval Tree is a very general relational storage structure for intervals characterized by the following properties:

- *Integration.* Built-in relational indexes are employed on an as-they-are basis without any intrusive modification.
- *Performance*. On top of a good analytical complexity, also the empirical performance is superior to competitors.
- *Extensions*. An enhanced functionality including the dynamic expansion of the data space does not deteriorate the performance.

The paper is organized as follows: Section 2 surveys related work for interval management in databases. In Section 3, we introduce the structure of the new Relational Interval Tree, whereas the algorithms for query processing are presented in Section 4. Section 5 discusses the integration into an ORDBMS. After an experimental evaluation in Section 6, the paper is concluded by Section 7.

**2 Related Work**

A variety of methods has been published concerning interval management in databases, most of them addressing temporal applications. The following sections intentionally survey interval handling in general. Specialized work e.g. on append-only structures for transaction time intervals is omitted due to lack of space.

**2.1 Main Memory Structures**

In the context of computational geometry, several data structures that support 1D interval data have been developed [PS 93] [Sam 90a]. Among them the *Segment Tree* of Bentley, the *Priority Search Tree* of McCreight and the *Interval Tree* of Edelsbrunner are the most popular. More recent developments include the *Interval Skip List* and the *IBS-Tree* of Hanson et al. [HJ 96].

As major limitation, the main memory resident data structures do not meet the characteristics of secondary storage. In a disk-oriented context, access is block-oriented and only small portions of a structure may reside in main memory at a given time. The concept of *Segment Indexes* [KS 91] is a way to overcome the problem by combining optimal interval structures with efficient disk-oriented indexing techniques. Our approach follows this paradigm and, moreover, uses existing index structures the way they are rather than to extend them what is typically required for custom secondary storage structures.

**2.2 Secondary Storage Structures**

A variety of secondary storage structures for intervals has been presented in the literature [TCG+ 93] [MTT 00]. Since they typically are based either on the augmentation of existing indexes or on the definition of new structures, most of them share the limited support for an integration into existing systems. When being committed to a commercial ORDBMS, the structures cannot be integrated as the built-in indexes are not extensible by the user.

The *Time Index* of Elmasri, Wuu and Kim [EWK 90] is an index structure developed for valid time intervals. A set of linearly ordered indexing points is maintained by a B+-tree, and for each of the points, a bucket of pointers refers to the associated set of intervals. Since an interval may be registered with several indexing points, the space requirement is $O(n^2)$ for *n* stored intervals [HJ 96]. Due to this redundance, the time complexity is $O(n)$ for insertion and deletion and $O(n^2)$ for interval intersection query processing [AT 95].

The *Interval B-tree* (*IB-tree*) of Ang and Tan [AT 95] has been developed to overcome the weaknesses of the time index. It can be regarded as an implementation of Edelsbrunner's interval tree using an augmented B+-tree rather than a binary tree. The original main memory model is thus transformed to an efficient secondary storage structure while preserving the optimal space and time complexity. As a disadvantage that we avoid in our approach, the complex three-fold structure of the interval tree is retained, and a dedicated structure of its own is used for each level. More seriously, the augmentation is not supported by commercial ORDBMS's.

The *Interval B+-tree* (*IB+-tree*) of Bozkaya and Özsoyoglu [BÖ 98] is a secondary storage model of the interval tree of [CLR 90] that differs from Edelsbrunner's interval tree by the fact that it uses the starting points of the intervals as primary keys rather than inner points. As a result, queries referring to the starting points of intervals such as *met-by* or *covered-by* are best supported. The I/O complexity for insertions or deletions as well as for finding a single intersecting interval for a query is $O(\log_b n)$. Retrieving all *r* intersecting intervals from an interval tree of [CLR 90], however, may result in a scan of the internal nodes covered by the query range. Thus, the worst case time complexity is $O(n)$ rather than the minimum $O(\log n + r)$ which Edelsbrunner's interval tree guarantees. The concept of time splits is introduced as a successful heuristics to avoid large fruitless scans. Again, the augmentation is an obstacle for the integration into commercial systems.

The *TP-Index* of Shen, Ooi and Lu [SOL 94] is based on a transformation of intervals into a triangular 2D space. Duplicates are avoided and the index is well suited for appending intervals since the data space may grow dynamically at the upper bound. The new access method is highly specialized to the suggested mapping, and an integration into existing ORDBMSs is not supported. A similar mapping organized by a grid file is presented in [LT 98].

The *External Memory Interval Tree* of Arge and Vitter [AV 96] is an externalization of Edelsbrunner's interval tree where the fan-out of the backbone tree is increased from 2 to $\sqrt{b}$ for disk blocks of size *b*. The intervals are stored in slab lists and multislab lists. The structure requires $O(n/b)$ pages for *n* intervals, supports insertions and deletions in $O(\log_b n)$ I/Os and requires $O(\log_b n + r/b)$ I/Os to answer a stabbing query reporting *r* results, which is the optimal complexity. Unfortunately, no experiments demonstrate the performance and, again, the integration into existing systems is not supported.

Beside originally one-dimensional interval index structures even multi-dimensional index structures can be employed for the task of managing 1D intervals. In general, however, spatial access methods such as Guttman's *R-tree* [Gut 84] and its variants including *R+-tree* [SRF 87] and *R\*-tree* [BKSS 90] may not behave well for one-dimensional intervals. Particularly the long durations and high overlaps of intervals in many temporal applications induce severe performance problems [EWK 90] [GLOT 96]. Two particular solutions are sketched in the following.

The *Segment R-tree (SR-tree)* of Kolovson and Stonebraker [KS 91] is a combination of the main memory-based segment tree with the secondary storage-oriented R-tree. The split algorithm includes cutting of long intervals into spanning portions and remnant portions thus producing some redundance. The authors recommend to combine the SR-tree with a *Skeleton Index* that performs a pre-partitioning of the data space in order to improve query processing performance. The SR-tree performs similar to the R-tree, and particularly the skeleton version yields an improvement. Just as the IB-tree and IB+-tree are augmentations of the B+-tree, implementing the SR-tree requires an adaption of the R-tree structure provided there exists any R-tree in the target DBMS at all.

## 2.3 Relational Storage Structures

Very few methods immediately meet our core requirement to use built-in index structures the way they are rather than to augment indexes or to introduce new structures whose integration typically is not supported by existing RDBMS.

The *Window-List* technique of Ramaswamy [Ram 97] is a static solution for the interval management problem and employs built-in B+-trees. It requires the optimal complexity of $O(n/b)$ space and $O(\log_b n + r/b)$ I/Os for stabbing queries. Unfortunately, updates do not seem to have non-trivial upper bounds, and adding as well as deleting arbitrary intervals can deteriorate the query efficiency of this structure to $O(n/b)$. Despite the practicability of the approach, no experimental results are demonstrated.

The *Tile Index* approach provided by the Oracle8i Spatial Product [RS 99] is a relational implementation of the multi-dimensional *Linear Quadtree* [Sam 90b]. Spatial objects are fully decomposed and indexed at a user-defined fixed quadtree level. Each resulting fixed-sized tile contains a set of variable-sized tiles as a fine-grained representation of the covered geometry. Intersection queries are performed by an equijoin on the indexed fixed-sized tiles, followed by a scan on the corresponding variable-sized tiles. When applied to one-dimensional data, the *Tile Index* technique maps an interval to a set of fixed-sized segments to be stored in a built-in B+-tree. Finding a good fixed level for the expected data distribution is crucial, as with the fixed level set too high, too much redundancy emerges due to small fixed-sized tiles, whereas a low fixed level causes too much overhead for the scanning of the variable-sized tiles. Therefore, an inappropriate setting causes the response time to degenerate vastly [Ora 97] [Ora 99b]. Unfortunately, the fixed level can only be set at index creation time, and adapting it to changing data and query distributions requires bulk-loading the whole dataset anew. This major drawback is not shared by our *RI-Tree.*

The *Interval-Spatial Transformation* (*IST*) of Goh et al. [GLOT 96] is based on encoding intervals by space-filling curves called *D-*, *V-* and *H-ordering* that map the boundary points into a linear space. No redundancy is produced, and space complexity is $O(n/b)$. Whereas the expansion of the data space at the upper bound is an explicit feature of the method, the expansion at the lower bound which is supported in our solution remains unclear. Unfortunately, no experimental performance results are reported in the paper. An analysis of the query algorithm reveals that the I/O complexity linearly depends on the resolution of the space whereas our method guarantees a logarithmic dependency on the resolution. A dynamic refinement of the resolution is not supported by the *IST*. A closer look at the structure reveals a strong correspondence to relational composite indexes. Aside from quantization aspects, the D-ordering is equivalent to an index on the interval attributes (*upper, lower*), the V-ordering corresponds to an index on (*lower, upper*). For intersection queries, however, these indexes reveal a poor query performance if the selectivity relies on the "wrong" bound, i.e. the second attribute in the index. Thus, intersection queries have a worst case I/O complexity of $O(n/b)$. The H-ordering simulates an index on *(upper-lower, lower),* thus particularly supporting queries referring to the interval length.

The *MAP21* approach of Nascimento and Dunham [ND 99] behaves very similar to the IST while the composite index (*lower, upper*) is emulated by a single-column index. A static partitioning by the interval lengths is introduced, but intersection query processing still requires $O(n/b)$ I/Os if the database contains many long intervals.

## 2.4 Custom Access Methods in ORDBMS

Modern commercial ORDBMS such as the Informix Universal Server [Inf 98], the Oracle8i Server [Ora 99a] or the IBM DB2 Universal Database [IBM 99] support the logical embedding of custom indextypes into the database system. Though the developer may use an extensibility framework to seamlessly bind a new access method to the query language, optimizer and query processor, there is no application program interface to the physical layer of the database engine, e.g. to the block manager. In the absence of any generalized search tree framework in the sense of [HNP 95], the developers have the option to store their custom index structure in external files. Of course, this technique allows excellent performance results, but as external files do not participate in the transaction management of the database server, the developers have to implement and maintain their own block manager including "industrial strength" concurrency control and recovery services.

Alternatively storing the index as a single Large Object (LOB) in the database also requires extensive implementation and maintenance efforts, particularly because the built-in locking mechanism on entire LOBs is far too coarse in a multi-user environment [BSSJ 99]. A natural way to avoid these technical problems is to exploit as much functionality of the database server as possible by mapping the index structure to a fine granular relational schema organized by built-in access methods. We follow this approach in the present paper and propose an efficient index structure for interval data that is designed to operate as logical indextype on top of the relational query language of the DBMS. The code can be implemented and maintained with minimum effort. Nevertheless our technique provides "industrial strength" stability and transaction semantics, while still showing a logarithmic worst case I/O complexity for interval intersection queries and while demonstrating the best experimentally measured performance compared to previous approaches.

### 3 The Relational Interval Tree

In this section, we introduce the new *Relational Interval Tree,* which is an efficient and powerful implementation of the interval tree on top of any relational database system. After reviewing the original interval tree, we present the basic idea and the technical details of our new structure.

### 3.1 Original Interval Tree Structure

Following the paradigm of [KS 91], we choose an appropriate main memory data structure to start with. The candidates mentioned before share the optimal time complexity of $O(\log n + r)$ for retrieving $r$ intervals from a set of $n$ intervals intersecting a given query interval. However, some of the structures require more than $O(n)$ space for managing $n$ intervals. In the segment tree, for instance, redundancy is caused by the decomposition of intervals.

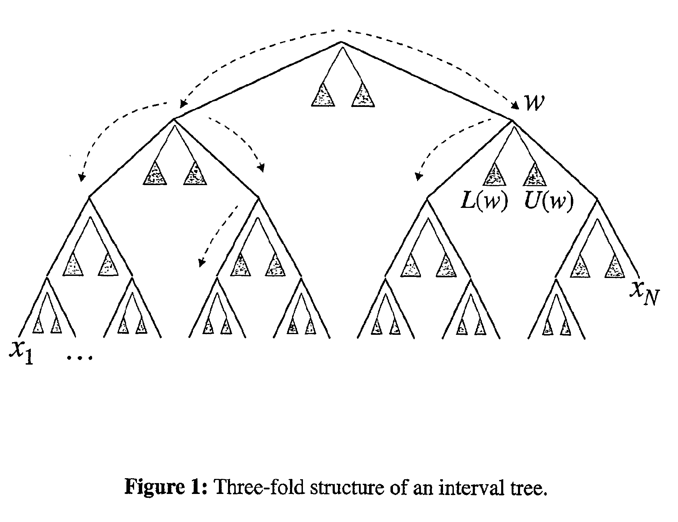

Edelsbrunner's interval tree [Ede 80] [PS 93] is a very simple but highly efficient data structure for intervals. Since the registered intervals are not decomposed, no redundancy is produced and the space complexity is $O(n)$. The, three-fold structure of the interval tree is illustrated in Figure 1: The backbone tree or primary structure is a balanced binary search tree that organizes the values of all bounding points of the intervals. Each of the inner nodes w is associated with two lists L(w) and U(w) that form the secondary structure. L(w) and U(w) contain, respectively, sorted lists of the lower and upper bounds of the intervals that are associated to w. An interval $(l, u)$ is registered at the highest node it overlaps, i.e. the first node w for which $l \le w \le u$ holds when descending the tree. The tertiary structure is an additional binary tree that supports fast range scans by linking the nodes w whose lists L(w) and U(w) are nonempty.

### 3.2 Structure of the Relational Interval Tree

Once having decided to employ the interval tree as core structure, the challenge is to develop a relational design that meets the following design goals:

- *Integration.* Available built-in index structures are employed on an as-they-are basis, i.e. without any modification. Obviously, this approach is superior to introducing new index structures or even augmenting available ones when being committed to an off-the-shelf RDBMS or ORDBMS.
- *Performance*. As much of the tree structure is retained as necessary to preserve the high efficiency when mapping the interval tree onto a relational schema. This goal includes the optimal space complexity $O(n/b)$ as well as the algorithms for query processing.
- *Extensions.* Enhancements of the functionality are introduced as long as they do not deteriorate the performance. This aspect includes arbitrary dynamic updates and, moreover, the expansion of the data space.

The basic idea of our technique relies on the following observations:

- For many applications, the *primary structure* does not need to be materialized at all. First, the nonempty nodes are linked by the tertiary structure as well. Second, even dynamic data spaces can be managed without a physical tree structure as we will show below. Only a few parameters occupying $O(1)$ space are required.
- The *secondary* and *tertiary structure* can be combined to a relational representation that highly fits to the strength of built-in composite indexes as provided already by an RDBMS. As desired, the space complexity is $O(n/b)$ for $n$ intervals.

### 3.3 Exploiting Built-In Indexes

The secondary and tertiary structure are mapped to a relational schema as follows: Let $L(w) = \{l_1,...,l_{n_w}\}$ denote the list of lower bounds of the $n_w$ intervals that are registered at node w. The same information is represented by the set of tuples $\{(w,l_1), ..., (w,l_{n_w})\}$. The union over the sets of all nodes yields a relation (*node, lower*) that exactly reflects the information of the secondary structure. The same considerations hold for the lists $U(w) = \{u_1, ..., u_{n_w}\}$ of upper bounds, and the union of sets $\{(w, u_1), ..., (w, u_{n_w})\}$ over all nodes w analogously results in a relation (*node, upper*).

In an RDBMS, the two relations (*node, lower*) and (*node, upper*) are efficiently organized by built-in composite indexes. These indexes are available, own a robust and highly tuned implementation, e.g. a B+-tree, already obey the transaction semantics and, for the given task, are hardly outperformed by user-defined structures. Typically, key compression avoids redundancy for equal node values. Since the indexes only manage the nonempty nodes, they already comprise the tertiary structure.

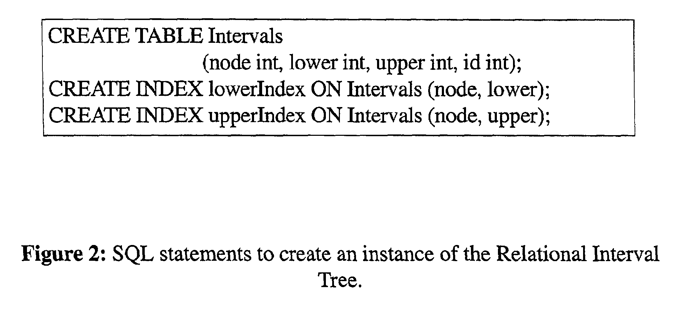

The resulting relational schema consists of a single relation (*node*, *lower*, *upper*, *id*) and two composite indexes (*node*, *lower*) and (*node*, *upper*). Thus, interval tree support for a given interval relation is obtained by adding a single attribute *node* and two indexes. Figure 2 presents sample DDL statements in SQL.

### 3.4 Updates in Relational Interval Trees

Whereas the registered intervals are completely managed by the relational schema, the remaining task of the primary structure is to organize the data space in order to manage insertions and query processing. The original interval tree is built on a static set of bounding points for the intervals. In a dynamic context, however, intervals are inserted and deleted whose actual bounding points are not known in advance. Moreover, temporal applications require an ongoing expansion of the data space. For this reason, a general and adaptable technique is required.

Our solution is as simple as effective: Rather than materializing any set of nodes, the primary structure is managed purely virtually. Thus, the bounding points of the intervals are not restricted to given values but for some $h \geq 0$, the entire range $[1, 2^h-1]$ is supported. Moreover, no reorganization of any structure is necessary when inserting or deleting intervals.

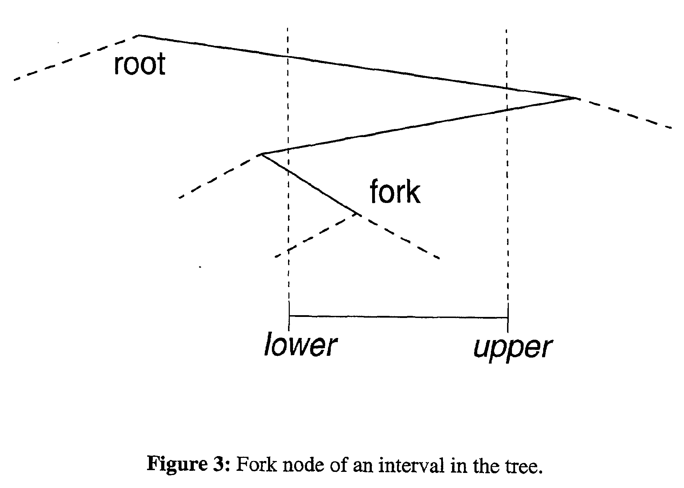

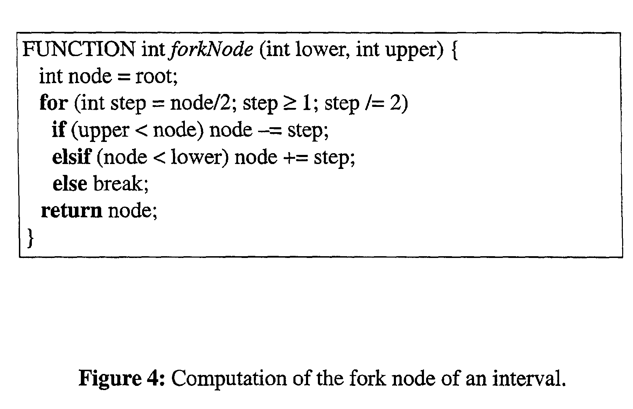

In the basic version, the root node is set to $2^{h-1}$, and the tree is traversed recursively via bisection, i.e. using simple integer arithmetics but consuming no I/O operations. As already mentioned, an interval ($l$, $u$) is registered at the topmost node $w$ for which $l \leq w \leq u$ holds, called *the fork node* (Figure 3). As an extension of the original interval tree, intervals may begin and end also at inner nodes rather than only at leaves. Points are represented by degenerate intervals with $l = u$. A procedure to determine the fork node is provided in Figure 4. For computational reasons, the recursion is controlled by a decreasing step width rather than the depth in the tree.

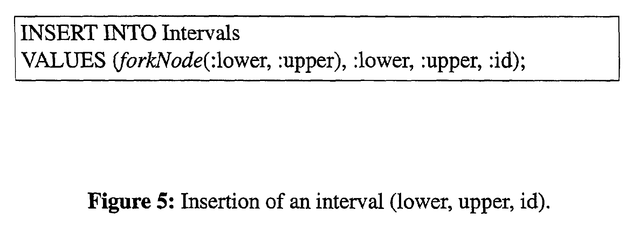

Once the fork node is computed, inserting the interval into the relational indexes is efficiently performed by the DBMS itself. Only a single SQL statement needs to be executed (Figure 5) which also holds for the deletion of an interval. Todays RDBMS typically perform both operations by $O(\log_b n)$ I/Os on a database containing $n$ intervals.

### 3.5 Dynamic Expansion of the Data Space

In the basic version, the data space is fixed to a range of $2^h-1$ values yielding a tree of height $h$. Whereas the I/O complexity for updates is $O(\log_b n)$ and thus independent of $h$, the CPU time complexity linearly grows with the height $h$.

We suggest a solution that combines various aspects: First, the tree height is adjusted to the actual data distribution. Second, the data space may be expanded dynamically at the upper bound; this requirement is typical for temporal applications. On top of this, even expansions of the data space at the lower bound are supported.

The tree height is affected by two parameters: The value of the root node at which searches in the tree start, and the depth down to which algorithms have to descend in the tree. In order to control the minimum tree height, we introduce the system parameters *root, offset, leftRoot*, *rightRoot* and *minstep.*

**Root.** Dynamically adapting the parameter *root* yields two advantages: The tree height is kept minimal, and the data space may be expanded at its upper bound as new intervals arrive. A root value of $2^h$ is sufficient for intervals with $0 <$ *lower* and *upper* $< 2^{h+1}$, and $h = \lfloor \log_2(\max\{upper\}) \rfloor$ is adjusted at every insertion without affecting the existing entries, i.e. in $O(1)$.

**Offset.** The optimality of the root height clearly holds for an actual data space starting at 1. The intervals, however, may be located in a range $[x_1, x_N]$ with $x_1 \gg 1$, i.e. far away from the origin. The resulting tree height is $\lfloor \log_2(x_N) \rfloor$ whereas a height of $\lfloor \log_2(x_N - x_1) \rfloor$ would be sufficient for a data range of length $x_N - x_1$. By shifting the intervals such that 1 becomes the lower bound of the data space, the optimal root height $h_{opt} = \lfloor \log_2(\max\{upper\} - \min\{lower\}) \rfloor$ is obtained. The amount of shift is stored in the parameter *offset.*

**LeftRoot and RightRoot.** A change of the *offset* parameter would cause a recalculation of all node values of previously inserted intervals. To avoid such an unnecessary $O(n/b)$ I/O effort, *offset* is fixed after having inserted the first interval into the tree. The interval that leftmost begins in the data space, however, is not guaranteed to arrive at first to be inserted. Therefore, the space needs to be expanded at the lower bound as well as at the upper bound.

In our solution, we use 0 as global root value and manage a left and a right subtree for negative and positive node values, respectively. Instead of the single parameter *root,* two parameters *leftRoot* and *rightRoot* are maintained that manage the expansion of the data space at the lower bound and at the upper bound independently.

**Minstep.** The parameter *minstep* traces the lowest level $i_{min}$ at which insertions of intervals have taken place with level 0 as the leaf level. Obviously, a query algorithm does not need to descend deeper than to level $i_{min}$ since the

secondary structures of all nodes in lower levels are empty. An estimation of $i_{min}$ is obtained from the interval length:

**Lemma.** An interval $(l, u)$ is not registered below the level $i_{min} = \lfloor \log_2(u - l) \rfloor$, i.e. the largest cardinal i with $2^i \leq u - l$.

**Proof.** Assume an interval $(l, u)$ registered at a level $j < \lfloor \log_2(u - l) \rfloor$. Then there are two successive multiples $k \cdot 2^j$ and $(k+1) \cdot 2^j$ for which $l \leq k \cdot 2^j < (k+1) \cdot 2^j \leq u$. Since one of the multiples is also a multiple of $2^{j+1}$, the interval $(l, u)$ had to be registered not lower than level $j+1$ which contradicts the assumption.

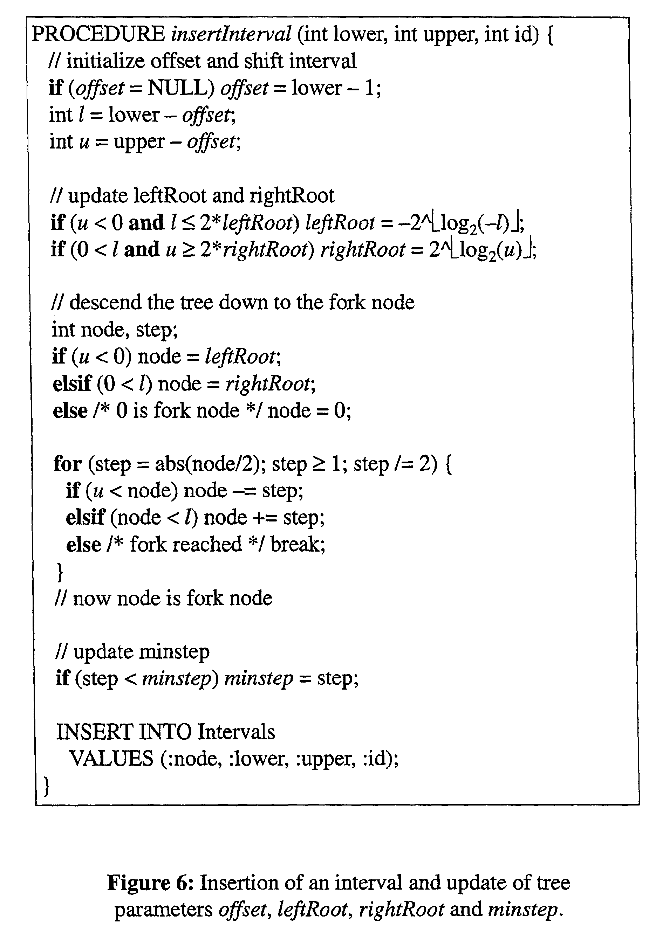

Figure 6 presents the final insertion procedure including the update of the persistent tree parameters. Only the artificial node value is shifted by *offset*; the lower and upper bounds of the intervals are stored without modification. The parameters *leftRoot* and *rightRoot* are initially set to 0, and *minstep* is initialized by infinity. The minimum value of 0.5 for minstep will not be stored and, thus, the implementation by an integer works well.

**3.6 Analysis of the Tree Height**

The parameters *offset, leftRoot*, *rightRoot* and *minstep* form an $O(1)$ representation of the primary structure that is dynamically adjusted to the cardinality $m$ of the current data space. Including the global root 0, the resulting tree height is $\log_2(m) + 1$ with $m$ given by the following formula where the minimum value of 0.5 for minstep may occur:

$$m = \max\{rightRoot, -leftRoot\}/minstep$$

In terms of data characteristics, the tree height is determined as follows: The range from *leftRoot* to *rightRoot* reflects the expansion of the data space from min{*lower*} to max{*upper*} over all currently registered intervals, and *minstep* indicates the granularity of the data space, i.e. the smallest interval length, min{*upper - lower*}. We increase this value by 1 to proper handle points which are represented by degenerate intervals. Nevertheless, *minstep* could be greater than min{*upper - lower* + 1} since even small intervals can be registered at high nodes, e.g. at the root node. In any case, the tree height does not depend on the number of intervals. In terms of the interval bounds, the tree height is $O(\log_2 m)$ where $m$ obeys the following complexity:

$$m = O\left(\frac{\max\{upper\} - \min\{lower\}}{\min\{upper - lower + 1\}}\right)$$

**4 Query Processing**

Having presented the internal structure of the relational interval tree in the preceding section, we now introduce the algorithms for query processing.

**4.1 Original Intersection Search**

Let us shortly review the algorithm for intersection query processing in the original interval tree. For any query interval *(lower, upper),* the primary structure is descended as follows:

(1) Descend from the root node down to the node preceding the fork node of the query interval. Each node w on this path lies either to the left or to the right of the query interval. Suppose $w < lower,$ then intervals $(l, u)$ registered at w intersect the query interval exactly if $lower < u$. To report these $r'$ intervals, the sorted list $U(w)$ of upper bounds is scanned in $O(r')$ time. Analogously, $L(w)$ is scanned for intervals fulfilling $l < upper$ in the symmetric case $upper < w$.

(2) Descend from the fork node along the left boundary of the query interval down to the node closest to *lower*. For each node w on this path two cases are distinguished: If $w < lower, U(w)$ has to be scanned as before to report the intersecting intervals registered at w. Otherwise, if $lower \leq w,$ the query interval is known to intersect all intervals registered at the node w. In addition, all intervals from the right subtree of w are reported except if w is the fork node.

(3) Descend from the fork node along the right boundary of the query interval down to the node closest to *upper.* Analogously to step (2), the lists $L(w)$ have to be scanned and all registered intervals from the respective nodes are reported. Note that the algorithm even works for degenerate intervals, i.e. *lower = upper,* thus supporting point queries as efficient as interval queries.

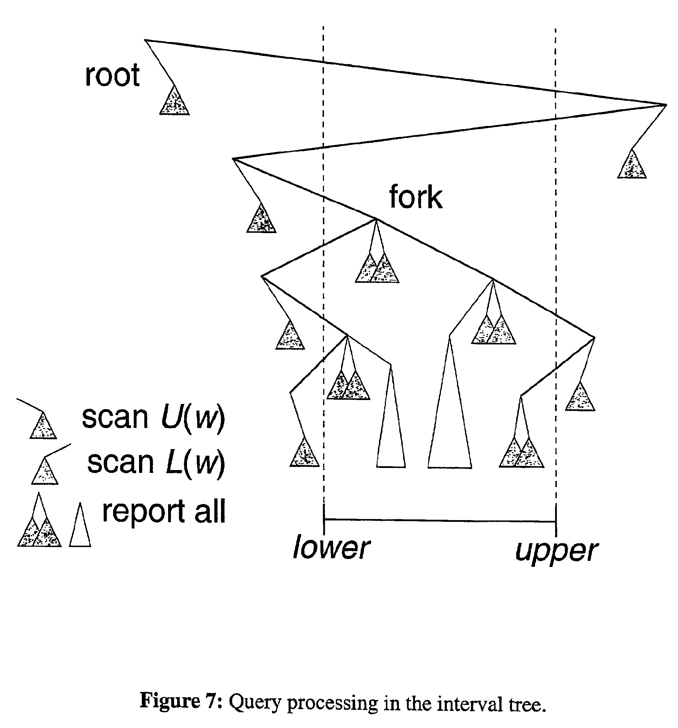

Figure 7 provides an illustration of the algorithm. Only the nodes of the tree which are affected by the search are depicted. The symbols indicate the nodes for which $U(w)$ or $L(w)$ are scanned, and the nodes for which all entries have to be reported. Note that the latter are exactly the nodes w that are covered by the query interval, i.e. *lower $\leq$ w $\leq$ upper.*

### 4.2 Translation into a Single SQL Query

The basic idea of our approach is to exploit the efficiency of built-in relational indexes. Scanning the lists $U(w)$ and $L(w)$ immediately translates to an index scan over the attributes (*node*, *upper*) and (*node*, *lower*), respectively. These attribute combinations are managed by the *upperIndex* and *lowerIndex* as defined above. Scanning the nodes $w$ between *lower* and *upper* is supported by any of the two indexes.

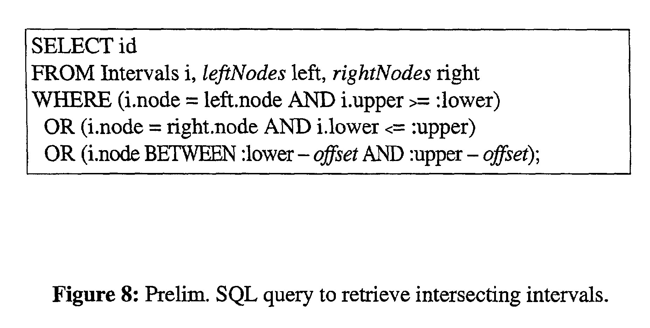

Rather than immediately scanning the lists $U(w)$ and $L(w)$ while descending the tree, in our algorithm the respective nodes are collected in temporary lists *leftNodes* and *rightNodes* both obeying the unary relational schema (*node*). These temporary relations are managed in the transient session state thus causing no I/O effort. As for interval insertion, the virtual primary structure is descended by integer arithmetics without any I/O operation. Finally, a single SQL query suffices to retrieve all intersecting intervals from the database. A basic version of the query is shown in Figure 8.

As illustrated in Figure 7, the nodes from *leftNodes*, from *rightNodes,* and the nodes between *lower* and *upper* are distinct from each other. The three OR-connected conditions in the WHERE clause therefore specify disjoint interval sets, and the DISTINCT option is omitted from the SELECT clause since no duplicates have to be eliminated.

### 4.3 Simplified SQL Query

The first transformation typically performed by relational optimizers is to split the complex OR-query into a set of three simpler queries connected by a UNION ALL operator. The subqueries concerning *leftNodes* and *rightNodes* are efficiently supported by the respective indexes *upperIndex* and *lowerIndex* and cannot be intermixed. The third subquery that only addresses the attribute node, however, is supported by any of the two indexes. Hence, in order to reduce the effort for internal query management, we combine this subquery with the *leftNodes* subquery according to the following lemma which analogously holds for the *rightNodes* subquery.

> **Lemma.** (*i*) The condition *'i.node = left node'* may be substituted by the equivalent condition *'i.node BETWEEN left.min AND left.max'* if *left.node = left.min = left.max* without loss of efficiency for an index scan. (*ii*) The condition *'i.node BETWEEN :lower - offset AND :upper - offset'* is not restricted by adding the constraint *'i.upper >= :lower'*.
> **Proof.** (i) The equivalence is obvious. An index scan searches the first hit by testing *left.min $\leq$ i.node* and proceeds while testing the condition *i.node $\leq$ left.max.* (*ii*) Since by definition, *i.node $\leq$ i.upper - offset* holds for any interval *i* in the tree, the condition *:lower - offset $\leq$ i.node* implies *:lower $\leq$ i.upper.*

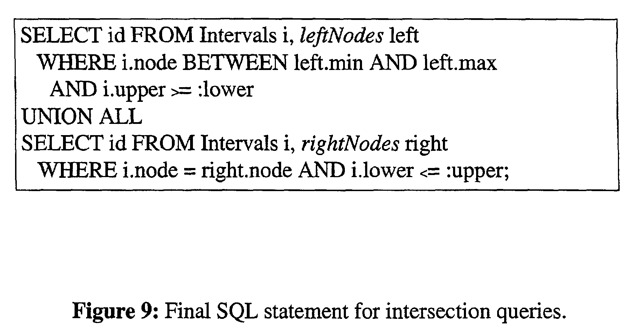

In detail, the modifications of the query are as follows: The temporary relation *leftNodes* now obeys the binary relational schema (*min, max*) instead of the unary schema (*node*). When descending the tree, a node w is inserted into *leftNodes* as a pair (*w*, *w*) rather than as a single value (*w*) as before. Finally, to include the original BETWEEN subquery, the pair *(lower - offset, upper - offset)* is inserted into *leftNodes*. The lemma guarantees that no intervals are missing after the transformation. Figure 9 presents the resulting two-fold SQL query for intersection search still producing no duplicates.

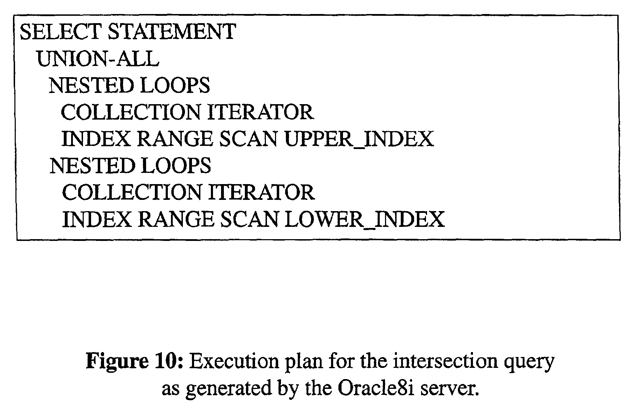

Figure 10 shows the execution plan for the query as it is generated by an Oracle8i server. For this example the attribute *id* was included in the indexes.

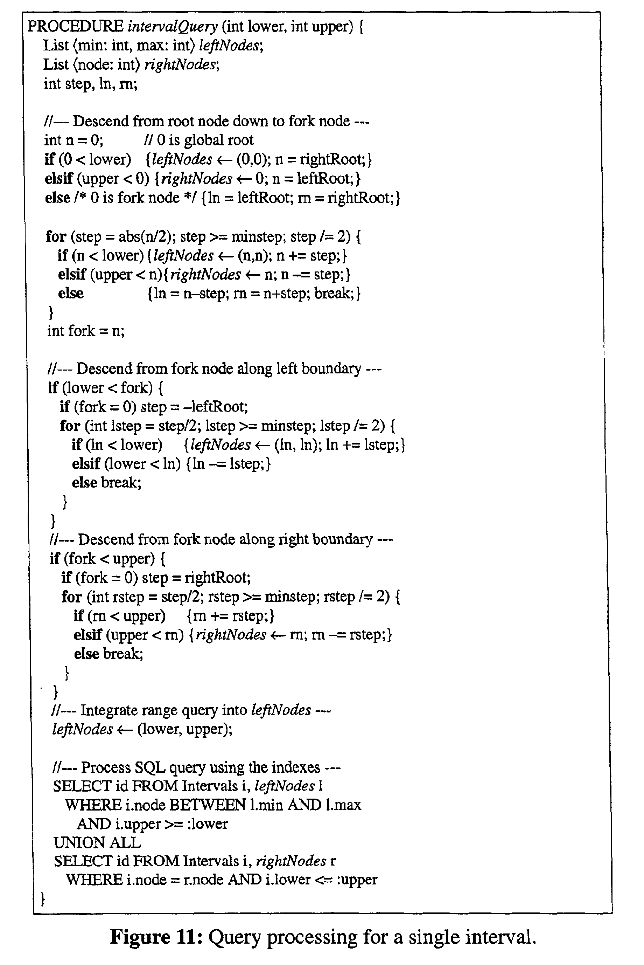

Figure 11 presents a possible implementation for the algorithm.

### 4.4 Analysis of the Algorithm

In Section 3.6, we already observed that the tree height of $h = O(\log m)$ only depends on two parameters that determine the quotient $m$, i.e. the extension of the intervals in the data space and the minimal interval length. It does not depend on the number $n$ of intervals registered in the tree. The tree height is an upper bound for the number of entries in the temporary relations *leftNodes* and *rightNodes.* For each of the $O(\log m)$ entries in the temporary relations, an index range scan on *upperIndex* or *lowerIndex* is performed. Such an index range scan consists of two phases. In a search phase, the beginning of the range is located, and in a scan phase, the resulting objects from the range are reported. Typical index structures such as the B+-tree in relational database systems require $O(\log_b n)$ I/O operations for the search phase on a database containing n objects, and $O(r'/b)$ I/Os in the scan phase to report $r'$ results from the range.

**Theorem** (*Complexity of Query Processing*).

An intersection query on a Relational Interval Tree of height *h* that returns *r* results from the *n* intervals in the tree has an I/O complexity of

$$O(h \cdot \log_b n + r/b)$$

**Proof.** For each of the *O*(*h*) entries in the temporary relations *leftNodes* and *rightNodes,* an index search of $O(\log_b n)$ I/O complexity is performed. Scanning and reporting the total of r results requires $O(r/b)$ operations, and the overall I/O complexity is $O(h \cdot \log_b n + r/b)$.

## 4.5 General Topological Queries

In addition to the intersection query predicate, there are 13 more fine-grained temporal relationships between intervals [BÖ 98]. Obviously, also queries based on these specialized predicates are efficiently supported by the Relational Interval Tree. For some of them, there is an additional potential for optimization since they only refer to the lower bound as in *meets* or in *before,* or they only refer to the upper bound as in *met-by* or in *after*. Competing methods such as the IB+-tree [BÖ 98] or the IST [GLOT 96] efficiently support only queries referring to one of the two interval bounds, i.e. *lower* for the IB+-tree or the V-ordering and *upper* for the D-ordering. Using these techniques, queries referring to the opposite bound are processed with a poor performance since *O*(*n*) comparisons are required in the worst case.

## 4.6 Handling Temporal Intervals

In the context of temporal databases, the special values *now* and *infinity* occur as upper values of valid time intervals [BÖ 98]. The straightforward solution to manage these intervals in separate indexes, however, yields the major disadvantage that additional SQL (sub-)queries have to be executed. This overhead is avoided by managing appropriate values for the fork nodes thus achieving a very natural integration into the Relational Interval Tree.

**Infinity.** In a first attempt, we set the fork node of an infinite interval to MAXINT but do not further modify the algorithms. Thus, the tree becomes very high but it is almost empty close to the root. A slight but very effective extension avoids the resulting overhead for query processing: An artificial exclusive value $fork_\infty$ is assigned to the attribute *node* of an infinite interval. At query processing time, $fork_\infty$ is inserted into the temporary list *rightNodes.* Thus, the lower bounds of intervals ending at *infinity* are tested against the upper bound of the query interval as desired. Note that if choosing $fork_\infty$ = NULL, the condition *'i.node = right.node'* in Figure 9 is not evaluated correctly whereas our choice to set $fork_\infty$ = MAXINT avoids any modification of the SQL statement thus yielding a perfect integration.

**Now.** Whereas *infinity* is constant over time, intervals ending at *now* continuously change their upper bound. Aiming at a correct positioning of now-relative intervals within the tree at any time requires permanent modifications of the node values and, therefore, of the tree. Our solution completely avoids such an overhead and, again, uses an artificial exclusive node value, e.g. $fork_{now}$ = MAXINT - 1, which is assigned to *now*-ending intervals when being inserted. At query processing time, $fork_{now}$ is inserted into the temporary table *rightNodes* exactly if $lower \le now,$ i.e. if the query interval begins in the past. As desired, the SQL query then tests the lower bounds of the now-ending intervals against the upper bound of the query interval.

## 5 Object-Relational Wrapping

The Relational Interval Tree may be easily implemented on top of *any* relational DBMS featuring a procedural query language like the Oracle8i Server with PL/SQL or the Informix Universal Server with SPL. A persistent data dictionary provides a convenient way to store index specific parameters such as *root* or *minstep,* whereas the *leftNodes* and *rightNodes* query tables can be efficiently managed in the transient user session state. As mentioned in Section 3.4, the insertion and deletion of a new interval requires only a single SQL statement. The computation and storage of the fork node and the update of the index parameters can be performed automatically by database triggers. Whereas the complete index maintenance therefore may be managed by a trigger mechanism, query processing has to be started manually by invoking the appropriate stored procedure.

Modern object-relational DBMS provide a solution to preserve the declarative paradigm of SQL even at query time, because all maintenance and access procedures of a custom index structure are completely hidden from the user. An extensible indexing framework allows the developer to package the implementation of the access method and the corresponding index data into a user-defined indextype [Inf 98] [Ora 99a] [IBM 99]. As the object-relational database server automatically triggers the maintenance and scan of custom indexes, end users can use the Relational Interval Tree just like a built-in index. With a cost model registered at the optimizer, the server is able to generate efficient execution plans for queries on interval data types.

**6 Experimental Evaluation**

**6.1 Experimental Setup**

To evaluate the performance of our approach, we have integrated the Relational Interval Tree into the Oracle Server Release 8.1.5 using PL/SQL and packaged stored procedures. All experiments have been executed on a Pentium Pro/180 server having 128 MB main memory and an U-SCSI hard drive. The database block cache was set to the default value of 200 database blocks with a block size of 2 KB. We have evaluated the performance of interval intersection queries on various interval databases with different data distributions and cardinalities (cf. Table 1). The bounding points of all intervals lie in the domain of $[0, 2^{20}-1]$. For the distributions $D_3$ and $D_4$ we assume transaction time or valid time intervals where the arrival of temporal tuples follows a Poisson process. Thus the inter-arrival time is distributed exponentially

As mentioned in Section 2 of this paper, among the wide range of existing interval access methods only the static Window-List approach [Ram 97], the Tile Index [RS 99] and the Interval-Spatial Transformation technique [GLOT 96] are designed to use existing B+-trees on an asthey-are basis, i.e. without any internal modifications or augmentations. Therefore, these techniques are suitable candidates for a performance comparison with the Relational Interval Tree.

Table 1:

| Sample interval databases with cardinality $n$. | | |
|---|---|---|
| Name | Starting point distribution | Duration distribution |
| $D_1(n,d)$ | uniform in $[0, 2^{20}-1]$ | uniform in $[0,2d]$ |
| $D_2(n,d)$ | | exponential in $[0, \infty]$, mean = $d$ |
| $D_3(n,d)$ | poisson process in $[0, 2^{20}-1]$ | uniform in $[0, 2d]$ |
| $D_4(n,d)$ | | exponential in $[0, \infty]$, mean = $d$ |

**Window-List.** In our experiments, queries on Window-Lists produced twice as many I/O operations than on the dynamic RI-tree. As the Window-List technique is a static storage structure, we do not further investigate it in the following evaluation of dynamic structures.

**Tile Index (*T-index*).** The Tile Index of the Oracle8i Spatial cartridge [RS 99] is an implementation of a two-dimensional Linear Quadtree. In our experiments, we have used the recommended hybrid indexing method of fixed- and variable-sized tiling as it is documented in [Ora 97] and [Ora 99b]. To ensure comparability to the other techniques, we have reimplemented the hybrid indexing package for one-dimensional data spaces. Our version is less complex and shows a significant performance gain over the original two-dimensional implementation. When we use the Tile Index for the interval domain of $[0, 2^{20}-1]$, the fixed level parameter may be set to a value between 0 and 20. For our experiments, we took a representative sample of 1,000 intervals from each individual data distribution and determined the optimal setting for the fixed level. In most cases, the optimum for the query performance was found at the level 7, 8 or 9.

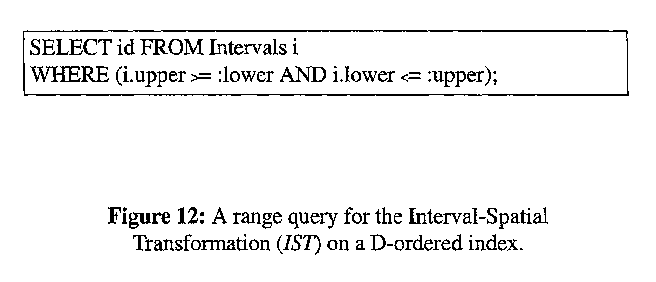

**Interval-Spatial Transformation (*IST*).** For the following experiments we have implemented the Interval-Spatial Transformation with *D-order* as proposed by [GLOT 96]. For integer interval bounds [*lower, upper*], the D-order index is equivalent to a composite index on the attributes (*upper, lower*) and therefore has identical performance characteristics. Range queries on D-ordered intervals can be expressed in a simple SQL statement by just testing the upper and lower bounds for intersection with the query range, as presented in Figure 12.

**Relational Interval Tree (*RI-tree*).** We have implemented the Relational Interval Tree as it is described in the previous sections. As each data distribution of Table 1 contains intervals with length 0 (i.e. points), the granularity of the respective data space is maximal. Therefore, the *minstep* system parameter always reaches its minimum value of 1 upon index creation and the virtual backbone tree is expanded to a height of 20, unless noted otherwise.

**6.2 Storage Occupation**

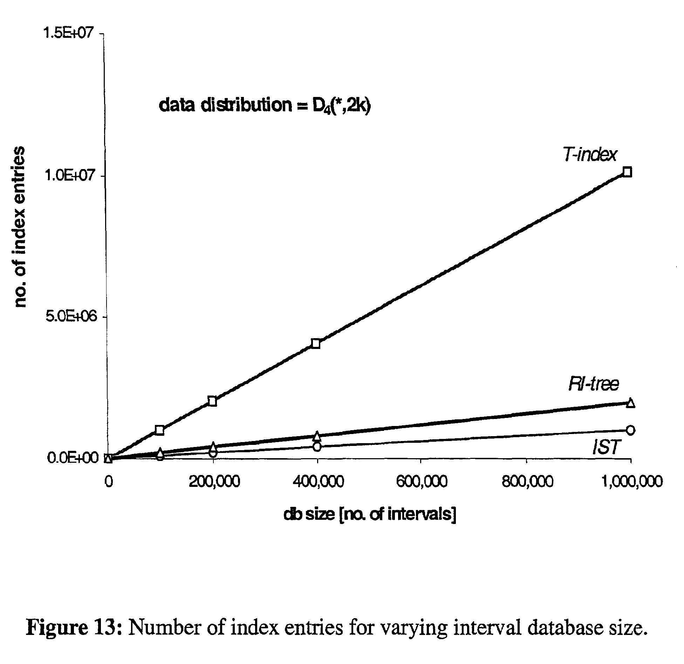

We performed several experiments to compare the *RI-tree* with the *IST* and the *T-index.* An illustration of the storage occupation of the three techniques is given in Figure 13 for a $D_4(*,2k)$ distribution. As the *IST* technique produces no redundancy, the number of index entries is equal to the number of indexed intervals. The *RI-tree* requires two index entries for each stored interval (for the lowerIndex and the upperIndex, cf. Figure 2). In our example, the *T-index* needs a redundancy factor of 10.1 to index the decomposed intervals accurately. As we have experienced in our evaluation, this causes major performance and storage problems for very large interval databases.

## 6.3 Query Processing

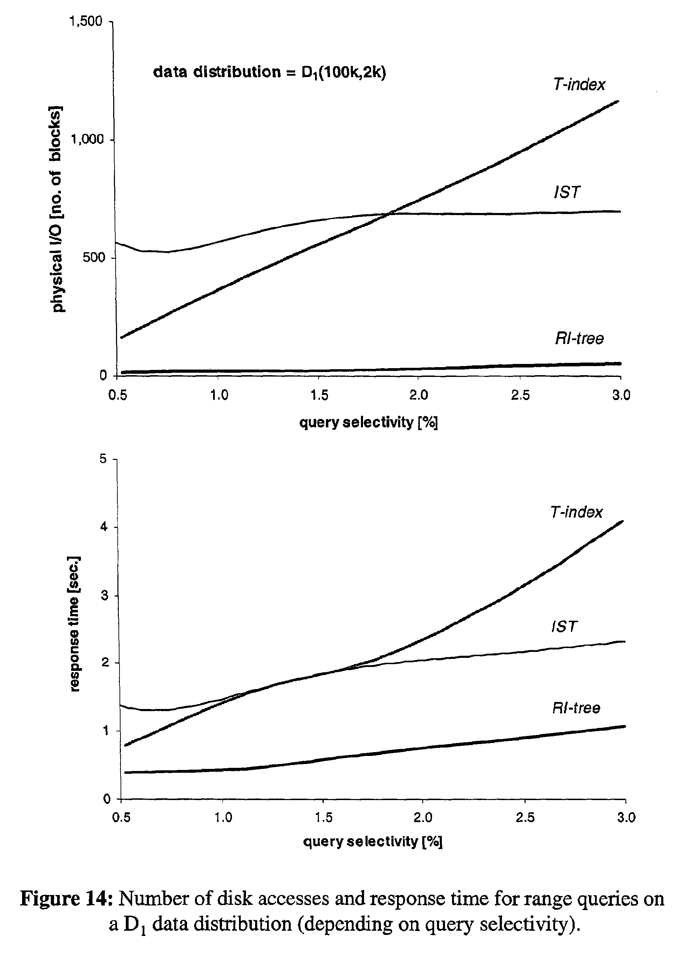

All query experiments given in this subsection have been performed with query intervals following a distribution which is compatible to the respective interval database. Our first experiments compare the number of disk block accesses and the response time of the three access methods depending on the selectivity of the range queries. Figure 14 depicts polynomially interpolated results of 100 range queries on a $D_1$(100k,2k) distribution. At a query selectivity of 0.5%, the *RI-tree* clearly outperforms the other techniques by a factor of 10.8 (*T-index*) and 46.3 (*IST*) for the disk accesses. At a 3.0% selectivity, the speedup factor is 22.8 (*T-index*) and 13.6 (*IST*). Thus the Relational Interval Tree shows a superior performance for both high and low query selectivities. The difference of the speedup between disk access and response time illustrates the CPU overhead consumed for the traversal of the virtual backbone of the *RI-tree.* For $D_2$(100k,2k), $D_3$(100k,2k), and $D_4$(100k,2k) datasets we measured similar results.

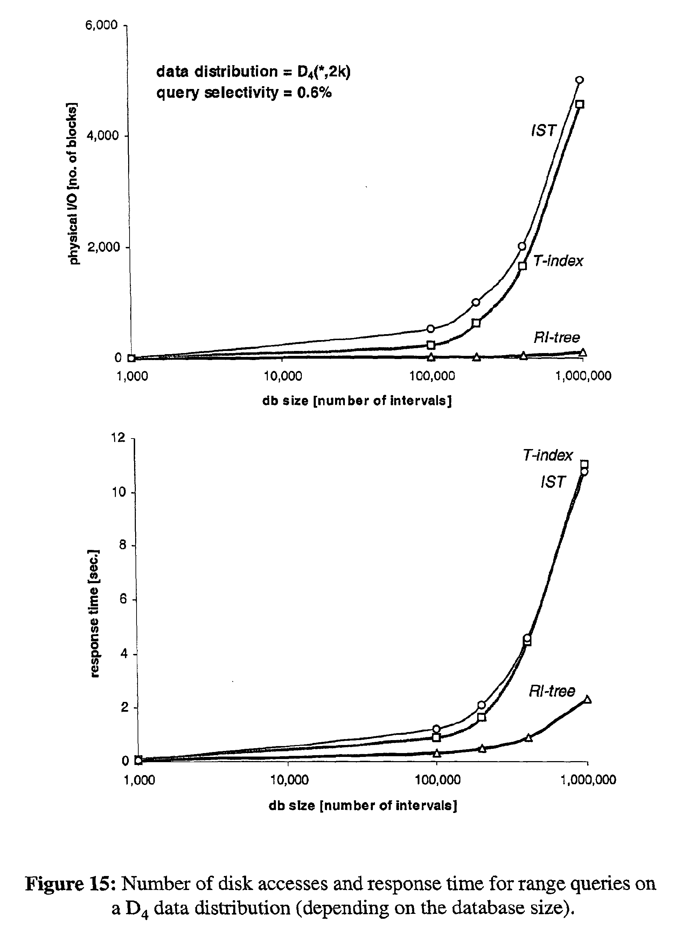

Figure 15 compares the scaleup of the three techniques for growing $D_4$(*,2k) datasets. For each database size, the average number of disk accesses and the average response time of 20 range queries is presented. All techniques show a linear scaleup, with the *T-index* performing slightly better than the *IST*. In this experiment as well, the *RI-tree* shows a significant performance gain over the other access methods. The speedup factor from the *T-index* to the *RI-tree* increases from 2 to 42 (disk access) and from 2.0 to 4.9 (response time). We observed a similar improvement for the same experiments on $D_1$(*,2k), $D_2$(*,2k), and $D_3$(*,2k) data distributions.

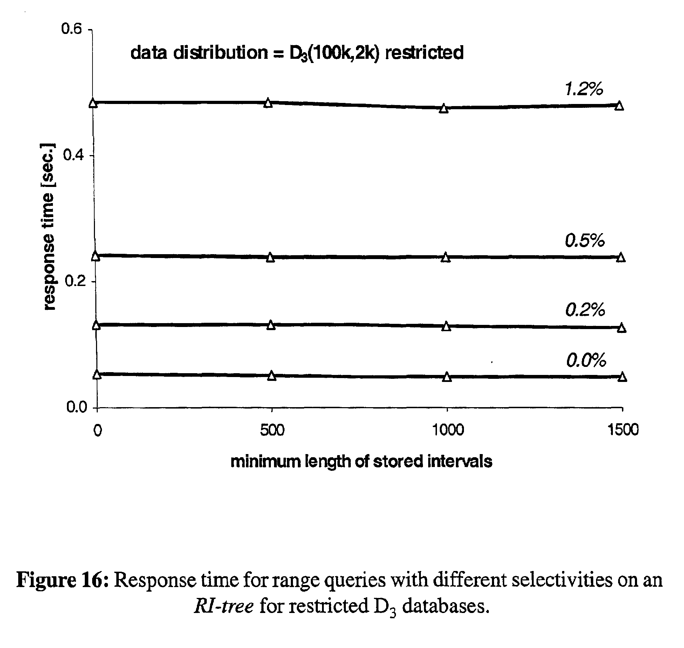

The next set of experiments investigates the influence of the dataspace granularity on the query performance of the *RI-tree*. For this experiment, we restricted the domain for the interval lengths of a $D_3$ distribution to [500, 3.5k], [1k, 3k], and [1.5k, 2.5k], respectively. With increasing minimum interval length, fewer levels of the virtual backbone have to be traversed due to larger *minstep* values. As shown in Figure 16, the response time is almost independent of the minimum length of the stored intervals. So the resulting height *h* of the virtual backbone has only little empirical significance. The response times for the different selectivities illustrate also the desired property that the performance of queries is largely bound to the number of results.

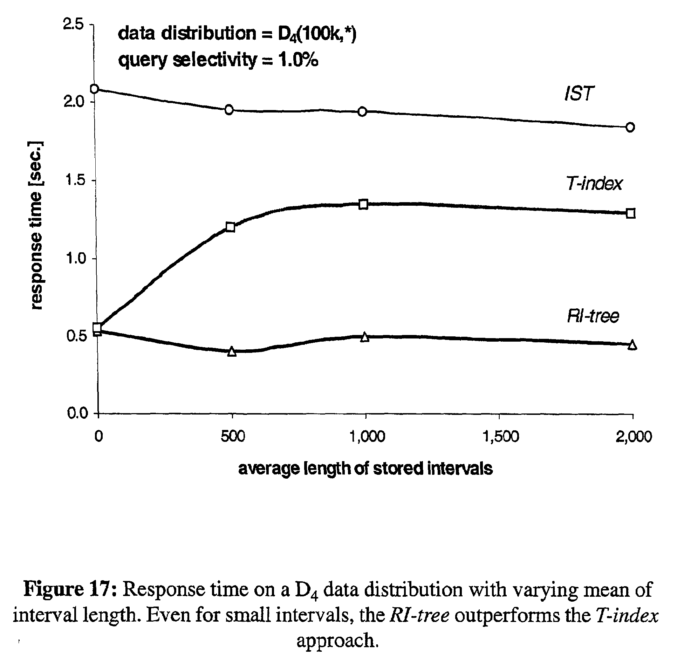

The next series of experiments compares the influence of the interval durations on the query performance of the different techniques. Figure 17 depicts the average results for a sample of 20 range queries on various $D_4$(100k, *) datasets with increasing average length of intervals. The T-*index* and the *RI-tree* require about the same response time for range queries, if the average length of the indexed intervals is very low. As short intervals do not suffer from the spatial decomposition, the redundancy caused by the *T-index* tiling approach decreases from 10.1 to 1 when the mean value of interval duration is reduced from 2,000 to 0. Even for a pure point database, the *RI-tree* performs slightly better than the *T-index.* The benefit of the *RI-tree* becomes obvious for a higher mean of duration. Both the *RI-tree* and the *IST* perform better as longer intervals are stored in the database.

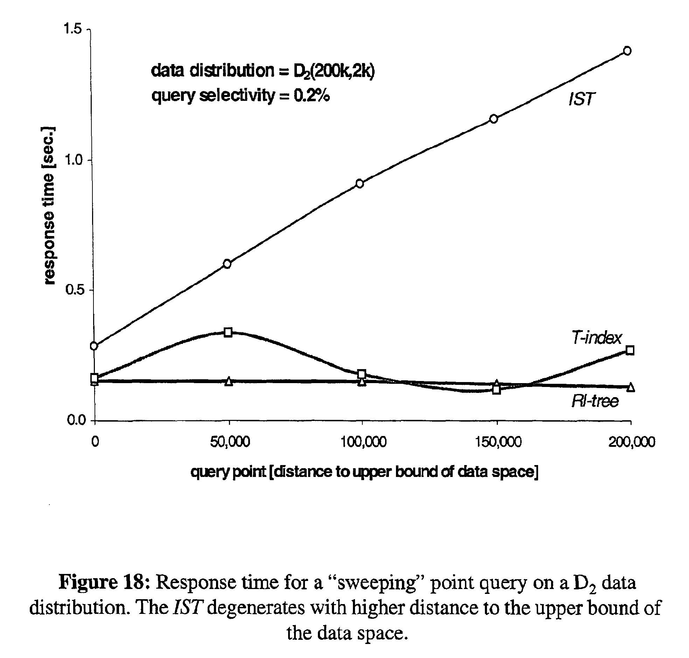

As expected, the location of the query range with respect to the data domain exerts a strong influence on the performance of the *IST*. In Figure 18 we illustrate this effect by "sweeping" a query point starting at the upper bound of the data space where the bound index on (*upper, lower*) benefits the most from the high selectivity in the first indexed column. The comparison between the *RI-tree* and *T-index* reveals another interesting aspect of this experiment: Although for point queries the *T-index* performs at its best as it retrieves no duplicates caused by redundancy, the *RI-tree* is still slightly better on the average. We obtained these results as well for the other interval data distributions $D_1$, $D_3$ and $D_4$.

## 7 Conclusions

In this paper, we presented the Relational Interval Tree which is a new access method for interval data. It can be created for any relational or object-relational table containing intervals. As we have shown, the main design goals for our new approach have been fulfilled:

- *Integration*. The RI-tree is not a stand-alone concept. It can easily be implemented on top of any relational DBMS that supports a procedural query language. As much functionality as possible of built-in indexes is exploited and no changes or additions to the internal layer of the database server are made. Therefore the effort of code development and code maintenance is minimized. For modern database servers featuring an object-relational application program interface, a natural and seamless integration can be achieved while preserving the declarative paradigm of SQL.
- *Performance*. According to our analytical and experimental evaluation, the RI-tree shows superior performance characteristics compared to previous approaches. This is achieved by introducing the virtual primary structure. Although the structure is space-oriented, the storage of intervals is object-driven and, thus, no storage is wasted for dead space.

- *Extensions.* Our basic concept supports a wide range of efficient application specific extensions. We have illustrated this by the dynamic expansion of the data space, by handling the special temporal variables *now* and *infinity,* and by discussing fine-grained topological query types.

By means of quantization, the proposed technique also applies to intervals in a floating point domain. When integrating the quantization into the calculation of the node values, the original floating point interval bounds can be stored in the tree.

The flexibility and extensibility of our concept opens up a number of interesting research problems and applications. A promising extension is the application of the Skeleton Index technique to the RI-tree, because a partial materialization of the primary structure can be adapted to the expected data distribution and, for example, the management of string intervals is supported.

**References**

[AT 95] Ang C.-H., Tan K.-P.: *The Interval B-Tree*. Information Processing Letters, Vol. 53, No. 2, 1995, pp. 85-89.

[AV 96] Arge L., Vitter J. S.: *Optimal Dynamic Interval Management in External Memory* (extended abstract). Proc. 37th Annual Symposium on Foundations of Computer Science (FOCS), 1996, pp. 560-569.

[BKK99] Böhm C., Klump G., Kriegel H.-P.: *XZ-Ordering: A Space-Filling Curve for Objects with Spatial Extension.* Proc. 6th Int. Symposium on Large Spatial Databases (SSD), Lecture Notes in Computer Science, Vol. 1651, Springer, 1999, pp. 75-90.

[BKSS 90] Beckmann N., Kriegel H.-P., Schneider R., Seeger B.: *The R \*-tree: An Efficient and Robust Access Method for Points and Rectangles*. Proc. ACM SIGMOD Int. Conf. on Management of Data, 1990, pp. 322-331.

[BÖ 98] Bozkaya T., Özsoyoglu Z. M.: *Indexing Valid Time Intervals*. Proc. 9th Int. Conf. on Database and Expert Systems Applications (DEXA), Lecture Notes in Computer Science, Vol. 1460, Springer, 1998, pp. 541-550.

[BSSJ 99] Bliujute R., Saltenis S., Slivinskas G., Jensen C.S.: *Developing a DataBlade for a New Index*. Proc. IEEE Int. Conf. on Data Engineering, 1999, pp. 314-323.

[CLR 90] Cormen T. H., Leiserson C. E., Rivest R. L.: *Introduction to Algorithms*. MIT-Press, Cambridge, Mass., 1990.

[Ede 80] Edelsbrunner H.: *Dynamic Rectangle Intersection Searching*. Institute for Information Processing Report 47, Technical University of Graz, Austria, 1980.

[EWK 90] Elmasri R., Wuu G. T. J., Kim Y.-J.: *The Time Index: An Access Structure for Temporal Data*. Proc. Int. Conf. on Very Large Databases (VLDB), 1990, pp. 1-12.

[FR 89] Faloutsos C., Roseman S.: *Fractals for Secondary Key Retrieval*. Proc. 8th ACM Symposium on Principles of Database Systems (PODS), 1989, pp. 247-252.

[GLOT 96] Goh C. H., Lu H., Ooi B. C., Tan K.-L.: *Indexing Temporal Data Using Existing B+-Trees.* Data & Knowledge Engineering, Vol. 18, No. 2, Elsevier Science, 1996, pp. 147-165.

[Gut 84] Guttman A.: *R-trees: A Dynamic Index Structure for Spatial Searching*. Proc. ACM SIGMOD Int. Conf. on Management of Data, 1984, pp. 47-57.

[HJ 96] Hanson E., Johnson T.: *Selection Predicate Indexing for Active Databases Using Interval Skip Lists.* Information Systems, Vol. 21, No. 3, 1996, pp. 269-298.

[HNP 95] Hellerstein J. M., Naughton J. F., Pfeffer A.: *Generalized Search Trees for Database Systems.* Proc. 21st Int. Conf. on Very Large Databases (VLDB), 1995, pp. 562-573.

[HP 94] Hellerstein J. M., Pfeffer A.: *The RD-Tree: An Index Structure for Sets.* Technical Report #1252, University of Wisconsin at Madison, Oct. 1994.

[IBM 99] IBM Corporation: *IBM DB2 Universal Database Application Development Guide, Version 6.* Armonk, NY, 1999.

[Inf 98] Informix Software, Inc.: *DataBlade Developers Kit User's Guide*. Menlo Park, CA, 1998.

[KRVV 93] Kanellakis P. C., Ramaswamy S., Vengroff D. E., Vitter J. S.: *Indexing for Data Models with Constraints and Classes*. Proc. 12th ACM Symposium on Principles of Database Systems (PODS), 1993, pp. 233-243.

[KS 91] Kolovson C. P., Stonebraker M.: *Segment Indexes: Dynamic Indexing Techniques for Multi-Dimensional Interval Data*. Proc. ACM SIGMOD Int. Conf. on Management of Data, 1991, pp. 138-147.

[LT 98] Lee C., Tseng T.-M.: *Temporal Grid File: A file structure for interval data*. Data & Knowledge Engineering, Vol. 26, No. 1, Elsevier Science, 1998, pp. 71-97.

[MTT 00] Manolopoulos Y, Theodoridis Y., Tsotras V. J.: *Advanced Database Indexing.* Kluwer Academic Publishers, Boston, MA, 2000, Chapter 4: *Access Methods for Intervals.*

[ND 99] Nascimento M. A., Dunham M. H.: *Indexing Valid Time Databases via B+-Trees.* IEEE Trans. on Knowledge and Data Engineering (TKDE), Vol. 11, No. 6, 1999, pp. 929-947.

[Ora 97] Oracle Corporation: *Oracle8 Spatial Cartridge User's Guide and Reference, Release 8.0.4.* Redwood City, CA, 1997.

[Ora 99a] Oracle Corporation: *Oracle8i Data Cartridge Developer's Guide, Release 8.1.5.* Redwood City, CA, 1999.

[Ora 99b] Oracle Corporation: *Oracle8i Spatial User's Guide and Reference, Release 8.1.5.* Redwood City, CA, 1999.

[PS 93] Preparata F. P., Shamos M. I.: *Computational Geometry: An Introduction.* Springer, 5th ed., 1993.

[Ram 97] Ramaswamy S.: *Efficient Indexing for Constraint and Temporal Databases.* Proc. 6th Int. Conf. on Database Theory (ICDT), Lecture Notes in Computer Science, Vol. 1186, Springer, 1997, pp. 419-431.

[RS 99] Ravada S., Sharma J.: *Oracle8i Spatial: Experiences with Extensible Databases.* Proc. 6th Int. Symposium on Large Spatial Databases (SSD), Lecture Notes in Computer Science, Vol. 1651, Springer, 1999, pp. 355-359.

[Sam 90a] Samet H.: *The Design and Analysis of Spatial Data Structures.* Addison-Wesley, Reading, Mass., 1990.

[Sam 90b] Samet H.: *Applications of Spatial Data Structures.* Addison-Wesley, Reading, Mass., 1990.

[SOL 94] Shen H., Ooi B. C., Lu H.: *The TP-index: A Dynamic and Efficient Indexing Mechanism for Temporal Databases.* Proc. IEEE Int. Conf. on Data Engineering (ICDE), 1994, pp. 274-281.

[SRF 87] Sellis T., Roussopoulos N., Faloutsos C.: *The R+-Tree: A Dynamic Index for Multi-Dimensional Objects.* Proc. 13th Int. Conf. on Very Large Databases (VLDB), 1987, pp. 507-518.

[TCG+ 93] Tansel A. U., Clifford J., Gadia S., Jajodia S., Segev A., Snodgrass R.: *Temporal Databases: Theory, Design and Implementation.* Benjamin/Cummings, Redwood City, CA, 1993.

**Purpose:**

The method supports the management of sets of interval data, i.e. sets of ranges (lower, upper) in the space of numbers, in a database. The retrieval of intervals refers to query points of query intervals.

**Data Structure:**

The method stores the intervals in one or more instances of an arbitrary index structure which supports range queries on composed entries (e.g., a B+-tree). Each interval is represented by two index entries:

1. An index entry composed by an artificial attribute ('node'), the lower bound of the interval ('lower'), and additional application data.
2. An index entry composed by an artificial attribute ('node'), the upper bound of the interval ('upper'), and additional application data.

Example: The index structures can be instantiated by the following SQL statements:

```
CREATE INDEX lowerIndex ON Intervals (node, lower, id);
CREATE INDEX upperIndex ON Intervals (node, upper, id);
or
CREATE TABLE lowerIndex (l_node, lower, id) ORGANIZATION INDEX;
CREATE TABLE upperIndex (u_node, upper, id) ORGANIZATION INDEX;
```

**Query Processing:**

For a given query interval (q_lower, q_upper), a set of range queries for the indexes is generated, and the overall result is obtained from the union of the results of the range queries. Each of the range queries belongs to one of the following three types:

1. A range query that refers to the artificial attribute in of the indexes.
2. A range query that refers to the artificial attribute in combination with the lower bound of an interval in the index.
3. A range query that refers to the artificial attribute in combination with the upper bound of an interval in the index.

Each range query may be processed separately or, alternatively, all search values for the artificial attribute may be collected in transient tables and processed by join operations. For example, the search values for queries of type 2 may be collected in a transient table *rightNodes*, and the search values for queries of type 3 may be collected in a transient table *leftNodes.*

Example: An interval intersection query can be performed by the following SQL query:

```
SELECT id FROM Intervals                            /* addresses one of the indexes */
   WHERE node BETWEEN q_lower AND q_upper           /* TYPE 1 */
UNION ALL
SELECT id FROM Intervals i, rightNodes right        /* addresses lowerIndex */
   WHERE i.node = right.node AND i.lower <= q_upper  /* TYPE 2 */
UNION ALL
SELECT id FROM Intervals i, leftNodes left          /* addresses upperIndex */
   WHERE i.node = left.node AND i.upper >= q_lower;  /* TYPE 3 */
```

or, equivalently:

```
SELECT id
FROM Intervals i, leftNodes left, rightNodes right
WHERE (i.node BETWEEN q_lower AND q_upper)          /* TYPE 1 */
   OR (i.node = right.node AND i.lower <= q_upper)  /* TYPE 2 */
   OR (i.node = left.node AND i.upper >= q_lower);  /* TYPE 3 */
```

or:

```
SELECT id FROM lowerIndex                              /* alternatively: upperIndex */
   WHERE l_node BETWEEN q_lower AND q_upper            /* TYPE 1 */
UNION ALL
SELECT id FROM lowerIndex l, rightNodes right
   WHERE l.l_node = right.node AND l.lower <= q_upper  /* TYPE 2 */
UNION ALL
SELECT id FROM upperIndex u, leftNodes left
   WHERE u.u_node = left.node AND u.upper >= q_lower   /* TYPE 3 */
```

## Claims

1. A method of storing intervals in one or more instances of an arbitrary index structure which supports range queries on composed entries, wherein each interval is represented by at least two index entries:

   a) a first index entry composed by an artificial attribute, the lower bound of the interval, and optionally additional application data, and

b) a second index entry composed by an artificial attribute, the upper bound of the interval, and optionally additional application data.

2. A data structure for storing intervals in one or more instances of an arbitrary index structure, wherein each interval is represented by at least two index entries:

a) a first index entry composed by an artificial attribute, the lower bound of the interval, and optionally additional application data, and
b) a second index entry composed by an artificial attribute, the upper bound of the interval, and optionally additional application data.

3. A method of accessing a data structure, in particular a data structure according to claim 2, for a given query interval, wherein a set of range queries for indexes of the data structure is generated, and wherein said set of range queries is used for querying the indexes of the data structure.

4. The method of claim 3, wherein the overall result is obtained from the union of the results of the range queries, and wherein each of the range queries refers to the artificial attribute in one of the indexes.

5. The method of claim 3 or claim 4, wherein each of the range queries refers to the lower bound of an interval in one of the indexes or to the upper bound of an interval in one of the indexes.

6. The method of one of claims 3, 4, 5, wherein each range query is processed separately, and/or all search values for the artificial attributes are collected in transient tables and processed by join operations.

7. A computer readable data carrier comprising program instructions for making a general purpose computer perform a method of one of the claims 1, 3, 4, 5, 6.

**Figure 1:** Three-fold structure of an interval tree.

```
CREATE TABLE Intervals
              (node int, lower int, upper int, id int);
CREATE INDEX lowerIndex ON Intervals (node, lower);
CREATE INDEX upperIndex ON Intervals (node, upper);
```

**Figure 2:** SQL statements to create an instance of the Relational Interval Tree.

**Figure 3:** Fork node of an interval in the tree.

```
FUNCTION int forkNode (int lower, int upper) {
  int node = root;
  for (int step = node/2; step ≥ 1; step /= 2)
    if (upper < node) node –= step;
    elsif (node < lower) node += step;
    else break;
  return node;
}
```

**Figure 4:** Computation of the fork node of an interval.

INSERT INTO Intervals
VALUES (*forkNode*(:lower, :upper), :lower, :upper, :id);

**Figure 5:** Insertion of an interval (lower, upper, id).

```
PROCEDURE insertInterval (int lower, int upper, int id) {
  // initialize offset and shift interval
  if (offset = NULL) offset = lower − 1;
  int l = lower − offset;
  int u = upper − offset;


  // update leftRoot and rightRoot
  if (u < 0 and l ≤ 2*leftRoot) leftRoot = −2^⌊log₂(−l)⌋;
  if (0 < l and u ≥ 2*rightRoot) rightRoot = 2^⌊log₂(u)⌋;


  // descend the tree down to the fork node
  int node, step;
  if (u < 0) node = leftRoot;
  elsif (0 < l) node = rightRoot;
  else /* 0 is fork node */ node = 0;


  for (step = abs(node/2); step ≥ 1; step /= 2) {
    if (u < node) node −= step;
    elsif (node < l) node += step;
    else /* fork reached */ break;
  }
  // now node is fork node


  // update minstep
  if (step < minstep) minstep = step;


  INSERT INTO Intervals
    VALUES (:node, :lower, :upper, :id);
}
```

**Figure 6:** Insertion of an interval and update of tree
parameters *offset*, *leftRoot*, *rightRoot* and *minstep*.

**Figure 7:** Query processing in the interval tree.

```
SELECT id
FROM Intervals i, leftNodes left, rightNodes right
WHERE (i.node = left.node AND i.upper >= :lower)
  OR (i.node = right.node AND i.lower <= :upper)
  OR (i.node BETWEEN :lower - offset AND :upper - offset);
```

**Figure 8:** Prelim. SQL query to retrieve intersecting intervals.

```
SELECT id FROM Intervals i, leftNodes left
  WHERE i.node BETWEEN left.min AND left.max
    AND i.upper >= :lower
UNION ALL
SELECT id FROM Intervals i, rightNodes right
  WHERE i.node = right.node AND i.lower <= :upper;
```

**Figure 9:** Final SQL statement for intersection queries.

```
SELECT STATEMENT
 UNION-ALL
  NESTED LOOPS
    COLLECTION ITERATOR
    INDEX RANGE SCAN UPPER_INDEX
  NESTED LOOPS
    COLLECTION ITERATOR
    INDEX RANGE SCAN LOWER_INDEX
```

**Figure 10:** Execution plan for the intersection query
as generated by the Oracle8i server.

```
PROCEDURE intervalQuery (int lower, int upper) {
  List ⟨min: int, max: int⟩ leftNodes;
  List ⟨node: int⟩ rightNodes;
  int step, ln, rn;

  //--- Descend from root node down to fork node ---
  int n = 0;        // 0 is global root
  if (0 < lower)  {leftNodes ← (0,0); n = rightRoot;}
  elsif (upper < 0) {rightNodes ← 0; n = leftRoot;}
  else /* 0 is fork node */ {ln = leftRoot; rn = rightRoot;}

  for (step = abs(n/2); step >= minstep; step /= 2) {
    if (n < lower) {leftNodes ← (n,n); n += step;}
    elsif (upper < n){rightNodes ← n; n -= step;}
    else            {ln = n–step; rn = n+step; break;}
  }
  int fork = n;

  //--- Descend from fork node along left boundary ---
  if (lower < fork) {
    if (fork = 0) step = –leftRoot;
    for (int lstep = step/2; lstep >= minstep; lstep /= 2) {
      if (ln < lower)    {leftNodes ← (ln, ln); ln += lstep;}
      elsif (lower < ln) {ln -= lstep;}
      else break;
    }
  }
  //--- Descend from fork node along right boundary ---
  if (fork < upper) {
    if (fork = 0) step = rightRoot;
    for (int rstep = step/2; rstep >= minstep; rstep /= 2) {
      if (rn < upper)    {rn += rstep;}
      elsif (upper < rn) {rightNodes ← rn; rn -= rstep;}
      else break;
    }
  }
  //--- Integrate range query into leftNodes ---
  leftNodes ← (lower, upper);

  //--- Process SQL query using the indexes ---
  SELECT id FROM Intervals i, leftNodes l
    WHERE i.node BETWEEN l.min AND l.max
      AND i.upper >= :lower
  UNION ALL
  SELECT id FROM Intervals i, rightNodes r
    WHERE i.node = r.node AND i.lower <= :upper
}
```

**Figure 11:** Query processing for a single interval.

```
SELECT id FROM Intervals i
WHERE (i.upper >= :lower AND i.lower <= :upper);
```

**Figure 12:** A range query for the Interval-Spatial
Transformation (*IST*) on a D-ordered index.

**Figure 13:** Number of index entries for varying interval database size.

**Figure 14:** Number of disk accesses and response time for range queries on a $D_1$ data distribution (depending on query selectivity).

**Figure 15:** Number of disk accesses and response time for range queries on a $D_4$ data distribution (depending on the database size).

**Figure 16:** Response time for range queries with different selectivities on an *RI-tree* for restricted D₃ databases.

**Figure 17:** Response time on a $D_4$ data distribution with varying mean of interval length. Even for small intervals, the *RI-tree* outperforms the *T-index* approach.

**Figure 18:** Response time for a "sweeping" point query on a $D_2$ data distribution. The *IST* degenerates with higher distance to the upper bound of the data space.

# EUROPEAN SEARCH REPORT

**European Patent Office**

**Application Number**

EP 00 11 2031

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | CHIANG LEE ET AL: "Temporal grid file: a file structure for interval data" DATA & KNOWLEDGE ENGINEERING, MAY 1998, ELSEVIER, NETHERLANDS, vol. 26, no. 1, pages 71-97, XP001004414 ISSN: 0169-023X * abstract * * page 74, paragraph 2 - page 83, paragraph 3.3 * | 1-5,7 | G06F17/30 |
| A | CHUAN-HENG ANG ET AL: "The interval B-tree" INFORMATION PROCESSING LETTERS, 27 JAN. 1995, NETHERLANDS, vol. 53, no. 2, pages 85-89, XP001004415 ISSN: 0020-0190 * page 85, right-hand column, paragraph 2 - page 87, left-hand column, paragraph 3 * | 1-7 | |
| A | CHENG HIAN GOH ET AL: "Indexing temporal data using existing B/sup +/-trees" DATA & KNOWLEDGE ENGINEERING, MARCH 1996, ELSEVIER, NETHERLANDS, vol. 18, no. 2, pages 147-165, XP001004417 ISSN: 0169-023X * the whole document * | 1-7 | **TECHNICAL FIELDS SEARCHED (Int.Cl.7)** G06F |

-/--

The present search report has been drawn up for all claims

| Place of search | Date of completion of the search | Examiner |
|---|---|---|
| THE HAGUE | 21 May 2001 | Fournier, C |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**European Patent Office**

## EUROPEAN SEARCH REPORT

Application Number

EP 00 11 2031

### DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| A | AMAGASA T ET AL: "Implementing time-interval class for managing temporal data" PROCEEDINGS NINTH INTERNATIONAL WORKSHOP ON DATABASE AND EXPERT SYSTEMS APPLICATIONS (CAT. NO.98EX130), VIENNA, AUSTRIA, 26-28 AUG. 1998, pages 843-849, XP002167975 1998, Los Alamitos, CA, USA, IEEE Comput. Soc, USA ISBN: 0-8186-8353-8 * page 847, right-hand column, line 1, paragraph 4 - page 848, right-hand column, paragraph 4.4; figure 3 * ----- | 1-7 | |
| | | | TECHNICAL FIELDS SEARCHED (Int.Cl.7) |

The present search report has been drawn up for all claims

| Place of search | Date of completion of the search | Examiner |
|---|---|---|
| THE HAGUE | 21 May 2001 | Fournier, C |

EPO FORM 1503 03 82 (P04C01)